# EUROPEAN PATENT SPECIFICATION

(11) **EP 2 134 752 B1**
(45) Date of publication and mention of the grant of the patent: **19.04.2017**
(21) Application number: 08716568.4
(22) Date of filing: 15.03.2008
(51) Int. Cl.: C04B 28/14, C04B 24/38, C08B 11/20, C08B 11/193, C08L 1/28

(54) **METHYLHYDROXYPROPYLCELLULOSE (MHPC) FOR MINERAL -BOUND BUILDING MATERIAL SYSTEMS**
METHYLHYDROXYPROPYLCELLULOSE (MHPC) FÜR MINERALISCH GEBUNDENE BAUSTOFFSYSTEME
METHYLHYDROXYETHYLHYDROXYPROPYLCELLULOSE DANS DES SYSTÈMES DE MATÉRIAU DE CONSTRUCTION

(30) Priority: 05.04.2007 DE 102007016783
(43) Date of publication of application: 23.12.2009
(73) Proprietor: Dow Global Technologies LLC, Midland, MI 48674 (US)
(72) Inventor: BRACKHAGEN, Meinolf, 29664 Walsrode (DE); GROTE, Grit, 29683 Bad Fallingbostel (DE); KOWOLLIK, Martin, 29683 Bad Fallingbostel (DE); SCHLESIGER, Hartwig, 51399 Burscheid (DE)
(74) Representative: f & e patent
(86) International application number: PCT/EP2008/002096
(87) International publication number: WO 2008/122345

(56) References cited:
- GB-A- 2 262 527
- US-A- 4 979 681
- US-A1- 2001 025 101
- US-A1- 2001 034 441
- US-A1- 2005 241 541

## Description

The present invention relates to the preparation of methylhydroxypropylcellulose (MHPC) and the use thereof in mineral-bound building material systems, preferably in gypsum-bound building material systems, particularly preferably in gypsum machine plaster.

The class of substances consisting of cellulose ethers, including the group consisting of the binary alkylhydroxyalkylcelluloses with commercially utilized members methylhydroxyethylcellulose (MHEC) and methylhydroxypropylcellulose (MHPC), has for several decades been a universal and industrial field of activity and has been widely described. An overview of the chemical formulae and principles of the production (production processes and production steps) and a list of materials and a description of the properties and potential uses of the various derivatives is given, for example, in Houben-Weyl, Methoden der Organischen Chemie, Makromolekulare Stoffe [Methods of Organic Chemistry, Macromolecular Substances], 4th edition, Volume E 20, page 2042 (1987). The commercially utilized methylhydroxypropylcelluloses form viscous solutions in water at room temperature and are insoluble in hot water at temperatures above the flocculation point.

The preparation of alkylhydroxyalkylcelluloses may be summarized as follows: in an upstream part-step, the activation of the cellulosic starting material is effected, preferably with alkali solution. Thereafter, the alkali metal cellulose formed is reacted with the corresponding alkylene oxide and methyl chloride under forced conditions, any alkali used in excess expediently being substantially neutralized with super-stoichiometric amounts of methyl chloride. In the subsequent purification step, salt formed and other byproducts are separated off, preferably by washing with hot water.

The alkyl substitution is described in cellulose ether chemistry generally by the DS. The DS is the average number of substituted OH groups per anhydroglucose unit. The methyl substitution is indicated, for example, as DS (methyl) or DS (M).

Usually, the hydroxyalkyl substitution is described by the MS. The MS is the average number of moles of the etherification reagent which are bound in an ether-like manner per mole of anhydroglucose unit. The etherification with the etherification reagent propylene oxide is accordingly stated as MS (hydroxypropyl) or MS (HP).

The still water-moist cellulose ether obtained by washing with hot water and freed from byproducts and having a water content of in general ≥ 50% by weight is converted into a saleable form by drying and milling, if appropriate after further pretreatment (conditioning). The cellulose ethers are introduced onto the market preferably in powder or granular form having a water content of about 1 to 10% by weight.

Cellulose ethers are used in building material systems, such as, for example, manual and machine plasters, filling compounds, tile adhesives, air-placed concrete materials, flowable floorings, cement extrudates and emulsion paints, as thickeners and water retention agents.

The properties of these building material systems, in particular the consistency and the setting behavior, can be greatly influenced by the choice of the cellulose ether.

Particularly in gypsum-bound building material systems, i.e. gypsum-containing base mixes to which water has been added, lumps or nodules are often observed, which in the most unfavorable case can lead to irregularities and furrows and at least result in delays due to intensive reworking.

Attempts have been made to eliminate some of these problems by combinations of admixtures. Thus, WO 99/64368 discloses an additive mixture which mainly comprises cellulose ether and small amounts of a polymerized carboxylic acid and of a methacrylate or acrylate homo- or interpolymer. Unfortunately, the preparation of this additive mixture is complicated, requires additional mixing units and does not always lead to a reduction of the lumps. In addition the use of aqueous carboxylic acid solutions can lead to pH-induced chain degradation of the cellulose ether.

For mill drying in screenless high-speed impact mills, the substantial disintegration of the fiber structure by establishing high moisture contents of the material to be milled is proposed according to the prior art. Complete gelling of the cellulose ether with the loss of the fiber structure, for example due to high water contents (cf. GB 2262527A; page 8, line 19) is undesired and can lead to agglomeration in gypsum-bound building material systems. DE 38 39 831 describes the mill drying of lumpy or wadding-like MHPC having an unknown degree of substitution in a screen mill provided with friction elements. Neither of the two publications reveal how the agglomeration in gypsum-bound building material systems can be reduced.

It is therefore an object of the present invention to provide cellulose ethers which improve the processing properties of mineral-bound building material systems, in particular effectively reduce the lump formation in gypsum-bound building material systems, such as, preferably, gypsum machine plasters, and the preparation of which is not associated with the abovementioned disadvantages.

Surprisingly, this object was achieved if a methylhydroxypropylcellulose (MHPC) having a certain DS (methyl) and a certain MS (hydroxypropyl) is used, which methylhydroxypropylcellulose was milled in a certain range of the moisture content of the material to be milled.

The present invention therefore relates to a process for the preparation of mill dried methylhydroxypropylcellulose (MHPC), in which, as feed material, water- and optionally alcohol-moist methylhydroxypropylcelluloses having a DS (methyl) of from 1.50 to 2.1, an MS (hydroxypropyl) of from 0.40 to 1.5, and a water content of from 25 to 60% by weight are subjected to mill drying.

The methylhydroxypropylcelluloses to be used according to the invention preferably have a DS (methyl) of at least 1.55, particularly preferably of at least 1.58 and very particularly preferably at least 1.60.

The upper limit of the DS (methyl) is typically chosen so that the product is soluble in water at room temperature, preferably not more than 2.0 and particularly preferably not more than 1.9.

The lower limit of the MS (hydroxypropyl) is preferably 0.45, particularly preferably 0.50 and very particularly preferably 0.6. The upper limit of the MS (hydroxypropyl) is preferably 1.35 and particularly preferably 1.2.

The determination of the DS and MS is effected by the Zeisel method known to the person skilled in the art, described, for example, in P. W. Morgan, Ind. Eng. Chem. Anal. Ed. 18 (1946) 500 - 504, and R. U. Lemieux, C. B. Purves, Can. J. Res. Sect. B 25 (1947) 485 - 489.

Methylhydroxypropylcelluloses as are to be used in the process according to the invention have a total proportion of water of preferably less than 56% by weight, particularly preferably less than 49% by weight and very particularly preferably less than 42% by weight regardless of how the degree of moisture is established. The total water content of the methylhydroxypropylcellulose to be milled is preferably at least 30% by weight, particularly preferably at least 33% by weight and very particularly preferably at least 37% by weight.

The methylhydroxypropylcelluloses essential to the invention can be obtained by reaction of cellulose with methyl chloride and propylene oxide and subsequent purification with hot water, for example in the form of a usually water-moist filter cake or centrifuged residue. The reaction and purification of the methylhydroxypropylcelluloses are effected according to the prior art, for example in centrifuges or hydrocyclones with subsequent ultrafiltration as disclosed in EP 0 632 056. In a preferred purification process, a rotary pressure filter is used, as described, for example, in EP-B 1 652 860.

For example, additives, modifiers or further water can be added to the water-moist filter cake before the mill drying according to the invention. The water-moist filter cake can, for example, be cooled or mechanically compacted. The filter cake is preferably not cooled; particularly preferably, the temperature of the filter cake prior to introduction into the process according to the invention does not decrease below 30°C, very particularly preferably not below 40°C.

The moisture content of the methylhydroxypropylcellulose of the abovementioned type which is used is preferably achieved by mixing two or more methylhydroxypropylcelluloses having different water contents with one another so that a moisture content in the range of the present invention results.

It is preferred that at least one of the two or more methylhydroxypropylcelluloses used for the moisture adjustment has a moisture content of from 0.1 to 15% by weight.

It is furthermore preferred that at least one of the two or more methylhydroxypropylcelluloses used for providing the feed material has a water content of less than 62% by weight but of at least 40% by weight, preferably more than 44% by weight.

The invention therefore also relates to a process for the preparation of a material to be milled and mill drying of cellulose ethers, in which
a) a feed material having a certain water content is produced by mixing cellulose ethers of different moisture contents, which feed material subsequently
b) is simultaneously comminuted and dried in a milling apparatus.

In the case of the mixing of a plurality of methylhydroxypropylcelluloses for adjusting the moisture content essential to the invention the mixing can be effected in various ways. The filter cake as obtained in the industrial production of MHPC is preferably mixed with powder or granules of already mill dried MHPC so that the desired moisture content according to the invention is achieved.

This preferably takes place outside the milling chamber of the mill drying apparatus. The mixing can be carried out, for example, in a commercially available mixer or in a conveying screw. A mixing member and/or a conveying screw which ensures adequate thorough mixing is/are preferably present between the location of the addition and the mill.

The water-moist methylhydroxypropylcellulose filter cake is preferably mixed with already mill dried product in a targeted manner via a metering device. The already mill dried product may completely or partly, but preferably partly, comprise the oversize obtained during the milling, which is metered continuously or batchwise to the optionally conditioned water-moist filter cake. The added amount of dried and milled cellulose ether powder or granules depends not on the amount of oversize obtained but on the required total moisture content of the composition which is to be established.

If the moisture content of the methylhydroxypropylcellulose to be used in the process according to the invention is achieved by the abovementioned mixing of two or more methylhydroxypropylcelluloses having different moisture contents, the flowability of the moist product is usually better in comparison with methylhydroxypropylcelluloses of the same moisture content whose water content was established by another method, for example by partial drying or persistent pressure filtration. As a result, blockages and caking in the plant are usually reduced.

Methylhydroxypropylcellulose as obtained as a residue after the purification of MHPC with hot water (filter cake or centrifuge residue) and as used for providing the feed material as mentioned above usually has a water content of less than 62% by weight, preferably less than 55% by weight, particularly preferably less than 50% by weight. The minimum content of water is usually at least 40% by weight, preferably more than 42% by weight, particularly preferably more than 44% by weight, based in each case on the total mass of the moist cellulose ether.

Particularly preferably, a reduction of the water content is effected simultaneously with the comminution, in such a way that the difference between the water contents in % by weight, based on total mass, between mill entrance and exit is more than 10% by weight, preferably more than 20% by weight, particularly preferably more than 35% by weight. Very particularly preferably, the difference is more than 38% by weight if no cellulose ether powder or granules was or were mixed in.

Processes for the simultaneous comminution and drying of cellulose ethers are known, for example from the teaching of GB 2 262 527, DE 38 39 831, EP 1 127 910 and EP 1 127 895. Various mill types may be used, for example pinned-disk mills, bowl mills, hammer mills, screen mills, hammer bar mills and impact mills. The effect of drying is preferably supported by the use of gas or gas mixtures heated to temperatures above 40°C, preferably above 80°C, particularly preferably above 100°C, in the comminution apparatus. The mill drying may be followed by a further milling and/or drying step. Preferably, however, the milling is effected in one stage and the mill used is a screenless high-speed impact mill.

After the milling and drying stage, the product stream can be classified and the oversize completely or partly recycled batchwise or continuously into the process.

After the process according to the invention, the methylhydroxypropylcellulose powder thus obtained has a residue moisture content of from 0.1 to 15% by weight, preferably from 1 to 10% by weight, particularly preferably from 1.5 to 7% by weight.

The present invention furthermore relates to the methylhydroxypropylcelluloses obtainable by the process according to the invention.

The methylhydroxypropylcellulose according to the invention preferably has the following grading curve:

| Undersize | Percent |
|---|---|
| < 315 µm | 95 to 100 |
| < 250 µm | 90 to 100 |
| < 200 µm | 80 to 100 |
| < 160 µm | 70 to 99.9 |
| < 125 µm | 50 to 95 |
| < 100 µm | 30 to 90 |
| < 63 µm | 10 to 70 |

The viscosity of the products obtainable according to the invention, measured as a 2% by weight solution in water at 23°C with a Haake Rotovisko at 2.55 s⁻¹, is preferably from 10 to 200 000 mPa·s, particularly preferably from 100 to 150 000 mPa·s and very particularly preferably from about 1000 to 100 000 mPa·s, in particular from 10 000 to 80 000 mPa·s.

The bulk density of the products, measured on a loose bed, is preferably from 200 to 700 g/l, particularly preferably from 250 to 650 g/l and very particularly preferably from 300 to 600 g/l.

The methylhydroxypropylcelluloses according to the invention are distinguished particularly in that, compared with other methylhydroxypropylcelluloses of the prior art, they lead to improved processing properties of mineral-bound building material systems, in particular particularly little formation of lumps in gypsum-bound building material systems, such as, preferably gypsum machine plasters.

The present invention therefore furthermore relates to the use of the methylhydroxypropylcelluloses according to the invention in mineral-bound building material systems, preferably in gypsum-bound building material systems and particularly preferably in gypsum machine plasters.

The methylhydroxypropylcellulose is typically used in amounts of from 0.01 to 5% by weight, preferably from 0.1 to 0.8% by weight and particularly preferably from 0.2 to 0.4% by weight, based in each case on the dry mass of the mineral-bound building material system.

In the building material systems according to the invention, for example but not only, the following ingredients may be present in addition to the cellulose ether, the mineral binder and water:

| | |
|---|---|
| • Slaked lime | 0-30% by weight |
| • Mineral additives | 0-30% by weight |
| (e.g. quartz sand, limestone sand, limestone gravel, limestone powder, mica) | |
| • Lightweight aggregate | 0-20% by weight |
| (e.g. perlite) | |
| • Plastic dispersion powder | 0-20% by weight |
| • Fibers | 0-2% by weight |
| (e.g. cellulose fibers) | |
| • Accelerator | 0-0.8% by weight |
| • Added thickener | 0-0.5% by weight |
| (e.g. starch derivatives and guar derivatives, synthetic thickeners, polyacrylamide, polyvinyl alcohol) | |
| • Retardant | 0-0.5% by weight |
| • Air-entraining agent | 0-0.1% by weight |

In mineral-bound building material systems, the water/solids ratio is preferably from 0.3 to 0.9, particularly preferably from 0.4 to 0.8.

It is known to the person skilled in the art that methylhydroxypropylcellulose can usually be used in formulations not alone but with a number of additives and/or modifiers. Thus, methylhydroxypropylcelluloses mixed with small amounts of auxiliaries and additives, e.g. antifoams, swelling agents, fillers, lightweight aggregates, polyacrylates, polyacrylamides, air-entraining agents, dispersants, water repellents, plasticizers, superabsorbers, stabilizers and synthetic, semisynthetic and natural thickeners, can be used, for example, in base building material mixes.

### Examples

Unless noted otherwise, all stated percentages are based on weight.

### Example 1

A water-moist filter cake of a methylhydroxypropylcellulose having a DS (methyl) = 1.64 and an MS (hydroxypropyl) = 0.96 and a water content of 45%, based on the water-moist filter cake, is moistened to a water content of 55% after the washing with hot water and is divided into 4 parts. The moistened filter cake was present in the form of granules. Parts 2 to 4 are mixed with dried and milled cellulose ether powder comprising methylhydroxypropylcellulose having the same degree of substitution, which was milled in the same way, in a horizontal mixer so that moisture contents of mill material of 48, 42 and 35% by weight resulted.

Thereafter, the mixture is comminuted and dried in a screenless high-speed gas-jet rotary mill having a vertical drive shaft and seven grinding tracks which are equipped with impact plates which operate against a profiled opposite grinding track. The drying and transport gas used is nitrogen which is fed to the gas circulation at various points.

Located downstream of the mill is a cyclone where the main proportion of the finely milled product is deposited. The gas stream is then freed from residue dust in a downstream bag filter.

Arranged on the pure gas side is a radial fan which conveys the dust-free gas stream into a heat exchanger where the transport gas is heated to the required drying temperature and is finally passed back into the mill. The proportion of water vapor in the circulation gas is removed from the circulation gas before the mill in a gas scrubber arranged after the cyclone, so that a nitrogen-rich carrier gas composition is maintained.

Excess circulation gas is discharged from the gas circulation via a valve.

| **Experiment (C = comparison; I = invention)** | **I1** | **I2** | **I3** | **I4** |
|---|---|---|---|---|
| Moisture of the conditioned filter cake, % by weight | 55 | 55 | 55 | 55 |
| Mixing of milled cellulose ether with the filter cake | no | yes | yes | yes |
| Total moisture of the material to be milled, % by weight | 55 | 48 | 42 | 35 |
| Product moisture in % | 1.55 | 1.65 | 1.43 | 1.42 |
| Bulk density in g/l | 349 | 379 | 405 | 425 |
| Undersize < 63 µm, % | 28.06 | 24.32 | 25.97 | 28.74 |
| Viscosity V2 absolutely dry in mPa·s | 32 680 | 33 150 | 31 940 | 31 070 |

### Example 2

A water-moist filter cake of a methylhydroxypropylcellulose having a DS (methyl) = 1.64 and an MS (hydroxypropyl) = 0.97 and a water content of 44.5%, based on the water-moist filter cake, is moistened to a water content of 48% after the washing with hot water and is divided into 3 parts. The moistened filter cake was present in the form of granules. Parts 2 and 3 are mixed with dried and milled cellulose ether powder comprising methylhydroxypropylcellulose having the same degree of substitution, which was milled in the same way, in a horizontal mixer so that moisture contents of mill material of 39 and 35% by weight resulted.

| **Experiment (C = comparison; I = invention)** | **I5** | **I6** | **I7** |
|---|---|---|---|
| Moisture of the conditioned filter cake, % by weight | 48 | 48 | 48 |
| Mixing of milled cellulose ether with the filter cake | no | yes | yes |
| Total moisture of the material to be milled, % by weight | 48 | 39 | 35 |
| Product moisture in % | 1.25 | 1.38 | 1.17 |
| Bulk density in g/l | 405 | 434 | 468 |
| Undersize < 63 µm, % | 37.8 | 32.9 | 40.6 |
| Viscosity V2 absolutely dry in mPa·s | 35 700 | 34 700 | 35 980 |

### Example 3

MHPC having a DS (methyl) of 1.64-1.67 and an MS (hydroxypropyl) of 0.93-1.02 were prepared and were purified by washing with hot water, and the filter cake obtained was adjusted to various moisture contents with water. The conditioned filter cake was then subjected to mill drying as described in Example 1. The viscosity of the products, measured in a 2% by weight aqueous solution, is 57 600-60 200 mPa·s. The products were used in a base mix for light gypsum machine plaster (from Schwenk) and applied to a wall by means of a plastering machine. During the processing of the plaster, the lump formation was assessed.

| **Experiment (C = comparison; I = invention)** | **I8** | **I9** | **C1** | C2 |
|---|---|---|---|---|
| Moisture of the conditioned filter cake, % by weight | 48.5 | 60 | 64 | 68 |
| Lump formation | very little | little | pronounced | pronounced |
| Bulk density, g/l | 451 | 361 | 314 | 353 |

The experiment in which the samples were sprayed showed that a reduction of the lump formation can be achieved by a reduction of the moisture content of the granules.

### Example 4

Two MHPC having a comparable DS (methyl) of 1.75 or 1.77 and a different MS (hydroxypropyl) were prepared and were purified by washing with hot water, and the filter cake obtained was adjusted to a moisture content of 48% by weight with water. The conditioned filter cake was then subjected to mill drying as described in Example 1. The viscosity of the products, measured in a 2% by weight aqueous solution, is 49 400-56 000 mPa·s. The products were used in a base mix for a gypsum machine plaster and applied to a wall by means of a plastering machine. During the processing of the plaster, the lump formation was assessed.

| **Experiment (C = comparison; I = invention)** | **I10** | **C3** |
|---|---|---|
| DS (methyl) | 1.75 | 1.77 |
| MS (hydroxypropyl) | 0.51 | 0.29 |
| Lump formation | little | pronounced |
| Moisture of the conditioned filter cake, % by weight | 48 | 48 |
| Bulk density, g/l | 351 | 139 |

In the spray experiment, the samples with low MS (hydroxypropyl) showed extremely pronounced lumps regardless of the moisture content of the granules, while the sample according to the invention had less pronounced lump formation.

### Example 5

In a spray experiment analogous to Example 4, three MHPC were tested. Firstly, the 48% moisture content of the material to be milled was established by mixing a conditioned water-moist filter cake having a water content of 55% by weight with a dried and milled cellulose ether powder. The admixed cellulose ether powder consists of previously milled product having the same composition of the material to be milled. The sample thus prepared was milled and dried analogously to Example 1 (it is the cellulose ether from Example 1, Experiment I2).

A further MHPC was prepared from a filter cake having 62% of moisture, which was adjusted to 48% moisture content of the material to be milled as described above with cellulose ether powder from the same material to be milled.

A further sample was prepared by milling and drying a conditioned filter cake with 48% by weight of moisture without the addition of cellulose ether powder or granules (it is the cellulose ether from Example 2, Experiment I5).

It was found that the methylhydroxypropylcellulose prepared by admixing filter cake and cellulose ether powder or granules is less tacky and permits better sliding of the tool if the initial moisture content of the filter cake is not too high. If the initial moisture content is too high, good processability cannot be achieved even by mixing with cellulose ether powder.

| **Experiment (C = comparison; I = invention)** | **I11** | **I12** | **C4** |
|---|---|---|---|
| DS (methyl) | 1.64 | 1.64 | 1.64 |
| MS (hydroxypropyl) | 0.97 | 0.96 | 0.98 |
| Moisture of the conditioned filter cake, % by weight | 48 | 55 | 62.5 |
| Mixing of milled cellulose ether with the filter cake | no | yes | yes |
| Total moisture of the material to be milled, % by weight | 48 | 48 | 48 |
| Lump formation | very little | very little | extremely pronounced |
| Tack | good | very slight | good |

### Example 6

A reaction mixture from the preparation of an MHPC having a DS (methyl) of 1.41 and an MS (hydroxypropyl) of 0.94 is suspended in hot water after the reaction and filtered. The filter cake removed was lumpy and partly dissolved and was insufficiently freed from NaCl.

The experiment was repeated with the difference that an MHPC having a DS (methyl) of 1.64 and a MS (hydroxypropyl) of 0.97 was used. The resulting filter cake could be purified without the filter cake partially dissolving.

## Claims

1. A process for the preparation of mill dried methylhydroxypropylcellulose (MHPC), in which, as feed material, water- and optionally alcohol-moist methylhydroxypropylcelluloses having a DS (methyl) of from 1.50 to 2.1, an MS (hydroxypropyl) of from 0.40 to 1.5 and a water content of from 25 to 60% by weight are subjected to mill drying.

2. The process as claimed in claim 1, **characterized in that** the DS (methyl) is at least 1.55, preferably at least 1.6, but not more than 2.0, preferably not more than 1.9.

3. The process as claimed in claim 1 or 2, **characterized in that** the MS (hydroxypropyl) is at least 0.45 but not more than 1.35, preferably not more than 1.2.

4. The process as claimed in any of claims 1 to 3, **characterized in that** the total proportion of water in the feed material is below 56% by weight but at least 30% by weight, preferably at least 37% by weight.

5. The process as claimed in any of claims 1 to 4, **characterized in that** the water content of the feed material is adjusted by a procedure in which two or more methylhydroxypropylcelluloses having different water contents are mixed with one another.

6. The process as claimed in claim 5, **characterized in that** at least one methylhydroxypropylcellulose having a moisture content of from 0.1 to 15% by weight is used for the moisture adjustment.

7. The process as claimed in any of claims 1 to 5, **characterized in that** at least one methylhydroxypropylcellulose having a water content of less than 62% by weight but of at least 40% by weight, preferably more than 44% by weight is used for providing the feed material.

8. The process as claimed in any of claims 1 to 5, **characterized in that** the process is operated so that the mill dried methylhydroxypropylcellulose has a residue moisture content, based on water, of from 1 to 10% by weight, preferably of from 1.5 to 7% by weight.

9. A methylhydroxypropylcellulose obtainable by a process as claimed in claim 7.

10. The use of a methylhydroxypropylcellulose as claimed in claim 9 in mineral-bound building material systems.

11. The use as claimed in claim 10, **characterized in that** the mineral-bound building material systems are gypsum-bound building material systems.

12. A mineral-bound building material system containing a methylhydroxypropylcellulose as claimed in claim 9.

13. The mineral-bound building material system as claimed in claim 12, **characterized in that** the methylhydroxypropylcellulose is present in amounts of from 0.01 to 5% by weight, based on the dry mass of the mineral-bound building material system.

## Patentansprüche

1. Verfahren zur Herstellung von mahlgetrockneter Methylhydroxypropylcellulose (MHPC), bei dem als Ausgangsmaterial Wasser und optional alkoholfeuchte Methylhydroxypropylcellulosen mit einem DS (Methyl) von 1,50 bis 2,1, einem MS (Hydroxypropyl) von 0,40 bis 1,5 und einem Wassergehalt von 25 bis 60 Gew.-% einer Mahltrocknung unterzogen werden.

2. Verfahren wie in Anspruch 1 beansprucht, **dadurch gekennzeichnet, dass** der DS (Methyl) wenigstens 1,55, vorzugsweise wenigstens 1,6, aber nicht mehr als 2,0, vorzugsweise nicht mehr als 1,9 beträgt.

3. Verfahren wie in Anspruch 1 oder 2 beansprucht, **dadurch gekennzeichnet, dass** MS (Hydroxypropyl) wenigstens 0,45, aber nicht mehr als 1,35, vorzugsweise nicht mehr als 1,2 beträgt.

4. Verfahren wie in einem der Ansprüche 1 bis 3 beansprucht, **dadurch gekennzeichnet, dass** der Gesamtanteil an Wasser in dem Ausgangsmaterial unterhalb 56 Gew.-%, aber wenigstens 30 Gew.-%, vorzugsweise wenigstens 37 Gew.-% beträgt.

5. Verfahren wie in einem der Ansprüche 1 bis 4 beansprucht, **dadurch gekennzeichnet, dass** der Wassergehalt des Ausgangsmaterial durch eine Prozedur eingestellt wird, bei der 2 oder mehr Methylhydroxypropylcellulosen mit unterschiedlichen Wassergehalten miteinander gemischt werden.

6. Verfahren wie in Anspruch 5 beansprucht, **dadurch gekennzeichnet, dass** wenigstens eine Methylhydroxypropylcellulose mit einem Feuchtegehalt von 0,1 bis 15 Gew.-% zur Feuchteeinstellung verwendet wird.

7. Verfahren wie in einem der Ansprüche 1 bis 5 beansprucht, **dadurch gekennzeichnet, dass** wenigstens eine Methylhydroxypropylcellulose mit einem Wassergehalt von weniger als 62 Gew.-%, aber mindestens 40 Gew.-%, vorzugsweise mehr als 44 Gew.-% verwendet wird, um das Ausgangsmaterial bereitzustellen.

8. Verfahren wie in einem der Ansprüche 1 bis 5 beansprucht, **dadurch gekennzeichnet, dass** das Verfahren so durchgeführt wird, dass die mahlgetrocknete Methylhydroxypropylcellulose einen Restfeuchtegehalt, bezogen auf Wasser, von 1 bis 10 Gew.-%, vorzugsweise von 1,5 bis 7 Gew.-% aufweist.

9. Methylhydroxypropylcellulose, erhältlich durch ein Verfahren wie in Anspruch 7 beansprucht.

10. Verwendung einer Methylhydroxypropylcellulose wie in Anspruch 9 beansprucht in mineralgebundenen Baumaterialsystemen.

11. Verwendung wie in Anspruch 10, **dadurch gekennzeichnet, dass** die mineralgebundenen Baumaterialsysteme gipsgebundene Baumaterialsysteme sind.

12. Mineralgebundenes Baumaterialsystem enthaltend eine Methylhydroxypropylcellulose wie in Anspruch 9 beansprucht.

13. Mineralgebundenes Baumaterialsysteme wie in Anspruch 12 beansprucht, **dadurch gekennzeichnet, dass** die Methylhydroxypropylcellulose in Mengen von 0.01 bis 5 Gew.-%, bezogen auf die Trockenmasse des mineralgebundenen Baumaterialsystems, vorhanden ist.

## Revendications

1. Un procédé pour la préparation de méthylhydroxypropylcellulose (MHPC) ayant subi un broyage-séchage, dans lequel, en tant que matière d'alimentation, des méthylhydroxypropylcelluloses humidifiées à l'eau et facultativement à l'alcool ayant un DS (méthyle) allant de 1,50 à 2,1, une SM (hydroxypropyle) allant de 0,40 à 1,5 et une teneur en eau allant de 25 à 60 % en poids sont soumises à un broyage-séchage.

2. Le procédé tel que revendiqué dans la revendication 1, **caractérisé en ce que** le DS (méthyle) est d'au moins 1,55, de préférence d'au moins 1,6, mais n'est pas supérieur à 2,0, de préférence pas supérieur à 1,9.

3. Le procédé tel que revendiqué dans la revendication 1 ou la revendication 2, **caractérisé en ce que** la SM (hydroxypropyle) est d'au moins 0,45 mais n'est pas supérieure à 1,35, de préférence pas supérieure à 1,2.

4. Le procédé tel que revendiqué dans n'importe lesquelles des revendications 1 à 3, **caractérisé en ce que** la proportion totale d'eau dans la matière d'alimentation est au-dessous de 56 % en poids mais d'au moins 30 % en poids, de préférence d'au moins 37 % en poids.

5. Le procédé tel que revendiqué dans n'importe lesquelles des revendications 1 à 4, **caractérisé en ce que** la teneur en eau de la matière d'alimentation est ajustée par un mode opératoire dans lequel deux méthylhydroxypropylcelluloses ou plus ayant des teneurs en eau différentes sont mélangées l'une avec l'autre.

6. Le procédé tel que revendiqué dans la revendication 5, **caractérisé en ce qu'**au moins une méthylhydroxypropylcellulose ayant une teneur en humidité allant de 0,1 à 15 % en poids est utilisée pour l'ajustement de l'humidité.

7. Le procédé tel que revendiqué dans n'importe lesquelles des revendications 1 à 5, **caractérisé en ce qu'**au moins une méthylhydroxypropylcellulose ayant une teneur en eau inférieure à 62 % en poids mais d'au moins 40 % en poids, de préférence supérieure à 44 % en poids, est utilisée pour fournir la matière d'alimentation.

8. Le procédé tel que revendiqué dans n'importe lesquelles des revendications 1 à 5, **caractérisé en ce que** le procédé est mis en oeuvre de sorte que la méthylhydroxypropylcellulose ayant subi un broyage-séchage a une teneur en humidité résiduelle, sur la base de l'eau, allant de 1 à 10 % en poids, de préférence de 1,5 à 7 % en poids.

9. Une méthylhydroxypropylcellulose pouvant être obtenue par un procédé tel que revendiqué dans la revendication 7.

10. L'utilisation d'une méthylhydroxypropylcellulose telle que revendiquée dans la revendication 9 dans des systèmes de matériaux de construction liés à des minéraux.

11. L'utilisation telle que revendiquée dans la revendication 10, **caractérisée en ce que** les systèmes de matériaux de construction liés à des minéraux sont des systèmes de matériaux de construction liés à du gypse.

12. Un système de matériaux de construction liés à des minéraux contenant une méthylhydroxypropylcellulose telle que revendiquée dans la revendication 9.

13. Le système de matériaux de construction liés à des minéraux tel que revendiqué dans la revendication 12, **caractérisé en ce que** la méthylhydroxypropylcellulose est présente en des quantités allant de 0,01 à 5 % en poids, rapporté à la masse sèche du système de matériaux de construction liés à des minéraux.
